# FASCICULE DE BREVET EUROPEEN

(11) **EP 2 684 749 B1**
(45) Date de publication et mention de la délivrance du brevet: **30.05.2018**
(21) Numéro de dépôt: 13175414.5
(22) Date de dépôt: 05.07.2013
(51) Int. Cl.: B60S 1/34, B60S 1/52

(54) **Entraîneur de porte-balai d'essuie-glace pour maintenir un tuyau de liquide lave-glace**
Antriebskopf für einen Scheibenwischer zum halten eines Scheibenwaschflüssigkeitschlauchs
Windscreen wiper driving head holding a washing liquid pipe

(30) Priorité: 12.07.2012 FR 1256734
(43) Date de publication de la demande: 15.01.2014
(60) Demande divisionnaire: 17166219.0
(73) Titulaire: Valeo Systèmes d'Essuyage, 78322 Le Mesnil Saint Denis (FR)
(72) Inventeur: Picot, Philippe, 63000 Les Pradeaux (FR)
(74) Mandataire: Callu Danseux, Violaine

(56) Documents cités:
- FR-A1- 2 746 750
- JP-A- 2002 059 813
- JP-A- 2003 327 090
- JP-A- 2006 306 286
- JP-U- H0 386 874
- US-A1- 2002 133 893

## Description

L'invention concerne un entraîneur de porte-balai d'essuie-glace pour maintenir un tuyau, notamment de liquide lave-glace, sur un système d'essuyage de véhicule automobile.

Les systèmes d'essuyage de véhicule automobile intègrent des balais d'essuyage pour évacuer toute forme d'eau ou de résidus solides, par exemple des insectes, pouvant gêner le conducteur dans sa conduite. Pour améliorer l'évacuation des résidus solides, et pour nettoyer efficacement le pare-brise, il est possible de projeter sur le pare-brise une solution, souvent hydro alcoolique de type liquide lave-glace automobile. Le liquide lave-glace est projeté sur le pare-brise grâce à des dispositifs de projection. Ces dispositifs de projection peuvent être prévus aussi bien sur le capot grâce à des gicleurs intégrés dans ce capot ou bien être intégrés directement dans la structure du balai d'essuyage, pour améliorer le lavage du pare-brise, par l'intermédiaire d'une multitude de micro perforations le long de la lame. Dans ce dernier cas, il est nécessaire d'amener le liquide lave-glace directement au balai grâce à un tuyau, lequel doit être maintenu correctement lors des mouvements alternatifs du balai sur le pare-brise.

La demande de brevet JP2006-306286 décrit un essuie-glace comprenant une tête de bras reliée à un arbre moteur, cette tête étant recouverte par un couvercle. Un tuyau de liquide lave-glace, qui s'étend à la fois le long du bras et le long de la tête de bras, est relié à une buse de lavage fixée sur le balai pour projeter un liquide lave-glace sur le pare-brise. Le tuyau est d'abord positionné sur la tête de bras contre une paroi annulaire de cette tête de bras puis est maintenu en position par le couvercle une fois celui-ci rabattu sur la tête de bras.

Cette réalisation présente un inconvénient. En effet, pour maintenir le tuyau de liquide lave-glace sur la tête de bras, il est nécessaire d'emprisonner une portion du tuyau qui se trouve alors en contact avec deux pièces, à savoir la tête de bras et le couvercle. Le fait d'avoir deux pièces pour assurer le maintien du tuyau de liquide lave-glace peut générer des opérations de montage complexes, notamment exiger un jeu précis entre les deux pièces.

De plus, lors du montage du tuyau sur la tête de bras, il est nécessaire de maintenir temporairement en position le tuyau sur la tête pendant que l'on vient abaisser le couvercle. Cette étape de manipulation est délicate car elle demande de l'attention de la part de l'opérateur pour assurer un bon maintien du tuyau de liquide lave-glace sur la tête de bras.

Un but de l'invention est notamment de proposer un dispositif pour maintenir un tuyau, notamment de liquide lave-glace, sur un système d'essuyage de manière relativement simple.

Ce but est atteint, conformément à la présente invention, grâce à un entraîneur selon la revendication 1. L'invention permet de maintenir la portion courbée du tuyau grâce à une seule pièce, à savoir soit l'entraineur. Ceci permet d'éviter d'utiliser une pièce supplémentaire pour le maintien de la portion courbée.

Autrement dit, la portion courbée du tuyau est maintenue de manière autosuffisante par l'entraineur. De plus, comme la portion courbée du tuyau est en retrait du contour extérieur de l'entraineur, cette portion courbée est cachée au moins en partie, ce qui améliore l'esthétisme du système d'essuyage.

De manière particulièrement avantageuse, le dispositif de maintien est agencé pour permettre un montage amovible du tuyau dans le logement.

Le tuyau de liquide lave-glace est agencé de manière à pouvoir être relié à une première extrémité à un réservoir de liquide lave-glace et à une deuxième extrémité à un dispositif de projection de liquide lave-glace, notamment associé à un balai d'essuie glace. Le tuyau est flexible, étant de manière avantageuse réalisé en EPDM (éthylène-propylènediène monomère).

Si on le souhaite, l'entraîneur présente une forme sensiblement allongée suivant un axe longitudinal et l'orifice se situe à proximité d'une extrémité longitudinale de l'entraîneur. Cet orifice est par exemple de forme sensiblement circulaire lorsqu'il est observé suivant l'axe de rotation.

Le contour extérieur de l'entraîneur est préférentiellement sensiblement en forme d'arc de cercle autour de l'orifice. Selon l'invention, le logement recevant la portion courbée du tuyau est formé sur l'entraîneur. Cet entraîneur comporte une face inférieure, notamment sensiblement plane, et le logement est formé sur cette face inférieure. Le logement de l'entraîneur est formé entre au moins une nervure radialement intérieure et une nervure radialement extérieure. Selon l'invention, l'une au moins de la nervure intérieure et la nervure extérieure est en forme d'arc de cercle, notamment centré sur l'orifice de l'entraîneur, lorsque l'entraîneur est observé suivant l'axe de rotation. Avantageusement, l'une au moins des nervures intérieure et extérieure s'étend sur une ouverture angulaire d'au moins 10°, notamment 45°, par exemple d'au moins 180°.

L'entraineur comporte, si on le souhaite, au moins deux nervures extérieures.

L'entraîneur comporte avantageusement au moins une patte d'encliquetage agencée pour maintenir la portion courbée du tuyau dans le logement. Cette patte d'encliquetage est réalisée avec l'une des nervures intérieure et extérieure, de manière préférentielle avec la nervure intérieure. Avantageusement, la patte d'encliquetage est réalisée d'un seul tenant avec l'entraîneur.

La patte d'encliquetage comporte par exemple un retour qui s'étend parallèlement à la face inférieure de l'entraîneur, et qui vient en contact avec la portion courbée du tuyau.

L'entraîneur comporte préférentiellement au moins un élément de guidage du tuyau de liquide lave-glace, notamment agencé pour guider la portion courbée du tuyau vers le logement. Cet élément de guidage comporte par exemple un pion et cet élément de guidage est réalisé de préférence d'un seul tenant avec l'entraîneur.

Le cas échéant, l'entraîneur est réalisé en aluminium et obtenu de préférence par moulage.

Le capuchon est quant à lui disposé de préférence sur la face supérieure, notamment sensiblement plane, de l'entraîneur et ce capuchon peut être à distance de la portion courbée du tuyau.

Le capuchon présente avantageusement un contour sensiblement circulaire. Dans un autre exemple non revendiqué, le logement recevant la portion courbée du tuyau est formé sur le capuchon. Ce capuchon comporte une face supérieure, notamment sensiblement convexe et le logement du capuchon est avantageusement formé entre une jupe radialement intérieure et une jupe radialement extérieure du capuchon. De manière préférentielle, l'une au moins de la jupe intérieure et la jupe extérieure est de forme sensiblement cylindrique de révolution d'axe parallèle à l'axe de rotation.

Le capuchon comporte de préférence au moins une patte d'encliquetage agencée pour maintenir la portion courbée du tuyau dans le logement du capuchon. Cette patte d'encliquetage se raccorde à l'une des jupes intérieure et extérieure du capuchon, de préférence à la jupe extérieure. Avantageusement, la patte d'encliquetage est réalisée d'un seul tenant avec le capuchon. La patte d'encliquetage comporte un retour qui s'étend parallèlement à la face inférieure de l'entraîneur, et qui vient en contact avec la portion courbée du tuyau.

Le capuchon comporte de préférence une fente d'entrée débouchant dans le logement et une fente de sortie du logement et la portion courbée du tuyau s'étend depuis la fente d'entrée jusqu'à la fente de sortie. Les fentes d'entrée et de sortie sont formées avantageusement sur la jupe extérieure du capuchon.

Le logement peut être agencé de sorte que la portion courbée du tuyau s'étende sur une ouverture angulaire d'au moins 10°, notamment 45°, par exemple d'au moins 180°. La distance entre les fentes d'entrée et de sortie permet par exemple à la portion courbée du tuyau de s'étendre sur une ouverture angulaire d'au moins 10°, notamment 45°, par exemple d'au moins 180°.

De préférence, le capuchon est en matière plastique et est avantageusement obtenu par moulage par injection.

L'invention a également pour objet un système d'essuyage pour véhicule automobile, le système d'essuyage comportant :
- un dispositif de maintien d'un tuyau de liquide lave-glace tel que précité,
- un moteur d'entraînement et/ou une tringlerie agencé pour coopérer avec un arbre de rotation, l'arbre de rotation étant par ailleurs apte à coopérer avec l'entraîneur du dispositif de maintien.

L'arbre de rotation est ainsi relié d'une part à l'entraîneur et d'autre part au moteur d'entraînement et/ou à la tringlerie.

Si on le souhaite, l'orifice de l'entraineur est apte à coopérer avec l'extrémité supérieure de l'arbre de rotation et le capuchon est apte à venir coiffer l'extrémité supérieure de l'arbre de rotation. Ce capuchon est fixé de préférence de manière amovible sur l'arbre de rotation.

Le système d'essuyage peut comporter :
- un bras agencé pour coopérer avec l'entraîneur,
- un balai d'essuyage agencé pour coopérer avec le bras,
- un dispositif de projection de liquide lave-glace, associé au bras.

Le système d'essuyage comporte également, de préférence, un réservoir ainsi qu'une pompe de liquide lave-glace, relié a une extrémité du tuyau du dispositif de maintien, la pompe permettant d'acheminer le liquide lave-glace du réservoir au dispositif de projection. La pompe est agencée de manière à être déclenchée par l'utilisateur depuis l'intérieur du véhicule.

L'invention concerne également un procédé pour introduire un tuyau dans un dispositif de maintien précité, le procédé comportant l'étape de montage du tuyau sur le dispositif de maintien.

Le procédé peut comporter l'étape suivante :
- Introduire sensiblement radialement le tuyau de liquide lave-glace dans le logement de l'entraîneur

D'autres caractéristiques et avantages de l'invention apparaîtront à la lecture de la description détaillée qui suit, pour la compréhension de laquelle on se reportera aux dessins annexés, dans lesquels :
- la figure 1 est une vue schématique et partielle d'un système d'essuyage selon un premier mode de réalisation de l'invention,
- les figures 2a et 2b sont deux vues schématiques et partielles du dispositif de maintien du système d'essuyage selon le mode de réalisation de la figure 1, respectivement en perspective et suivant l'axe de rotation de l'entraineur,
- la figure 3 est une vue schématique et partielle d'un entraineur selon un autre exemple de réalisation de l'invention,
- les figures 4a et 4b sont deux vues schématiques et partielles d'un dispositif de maintien selon un autre mode de réalisation, respectivement sans et avec le tuyau,
- la figure 5a est une vue schématique et partielle du capuchon selon un autre mode de réalisation non revendiqué et
- la figure 5b est une vue schématique et partielle d'un dispositif de maintien avec le capuchon de la figure 5a.

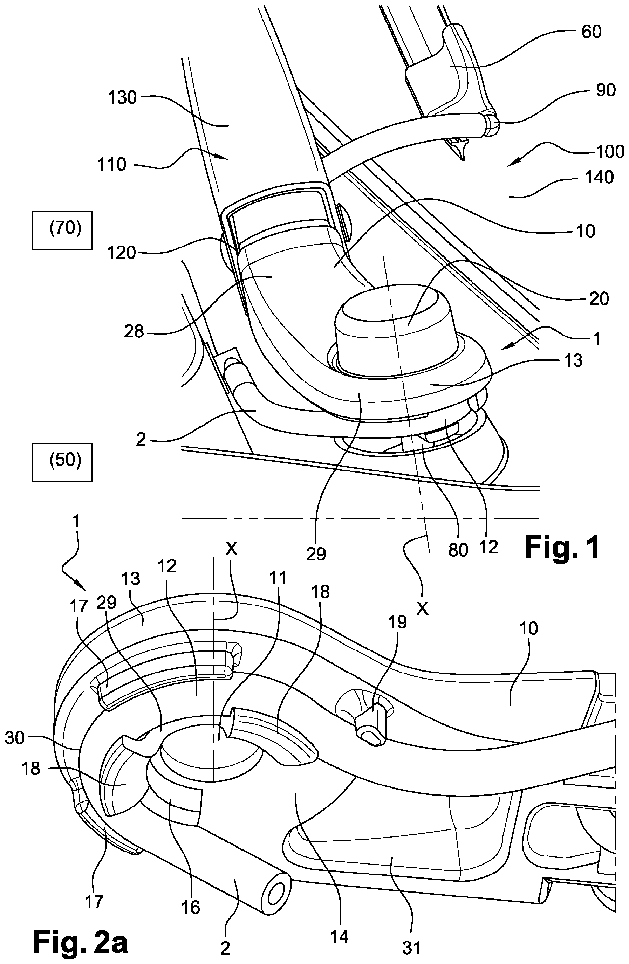

La figure 1 illustre un entraîneur 10 faisant partie d'un porte-balai 110 installé sur un véhicule. Le porte balai 110 comprend, outre l'entraîneur 10, un bras 130 rendu solidaire de l'entraîneur 10 au moyen d'un ensemble pivot 120 connu en soi. L'ensemble pivot 120 permet à l'utilisateur de pouvoir faire pivoter le bras 130 par rapport à l'entraineur 10 et ainsi permettre la manipulation d'un balai d'essuyage 60 placé à une extrémité du bras 130.

Le balai d'essuyage 60 assure l'évacuation de l'eau présente sur un pare-brise 140 du véhicule. Un tel balai d'essuyage 60 est par exemple de type à lame plate (« flat blade », en anglais), c'est-à-dire comprenant une raclette, une ou plusieurs vertèbres de rigidification et une fixation unique centrale réalisée par un connecteur mécanique lié à l'extrémité du bras 130. Un tel balai plat peut également comporter un déflecteur d'air solidaire du balai et agencé pour exploiter l'effet dynamique du déplacement du véhicule pour augmenter la force d'appui du balai d'essuyage 60 sur le pare-brise 140.

Le porte balai 130 ou le balai d'essuyage 60 sont associés à un dispositif de projection 90 d'un liquide de lavage du pare-brise 140. Selon l'exemple de réalisation représenté sur la figure 1, le dispositif de projection 90 peut comporter une canalisation intégrée au balai d'essuyage 60, et qui chemine le long de l'axe longitudinal de ce balai d'essuyage 60. Un tel conduit peut par exemple être formé dans une partie de la structure du déflecteur d'air. Selon un exemple de réalisation non représenté, le dispositif de projection 90 peut comporter une rampe de projection distincte du balai d'essuyage 60 et rapportée sur le bras 130.

Le dispositif de projection 90 du liquide lave-glace est alimenté en liquide lave-glace par un tuyau 2. Dans l'exemple décrit, le tuyau 2 s'étend depuis une sortie sous capot jusqu'au balai d'essuyage 60. Ce tuyau 2 peut, par exemple, être solidaire du bras 130 au moyen d'agrafes de solidarisation (non représentées) qui maintiennent en position le tuyau 2 sur le bras 130.

Le tuyau 2 est relié à une première extrémité sous capot à un réservoir 50 de liquide lave-glace associé à une pompe 70 permettant d'acheminer le liquide lave-glace du réservoir 50 jusqu'au dispositif de projection 90. La pompe 70 est agencée de manière à pouvoir être déclenchée depuis l'intérieur du véhicule par le conducteur ou par un système automatisé.

L'entraîneur 10, selon l'invention, est réalisé de manière monolithique par moulage d'un matériau de type aluminium ou zamak.

L'entraîneur 10 s'étend globalement longitudinalement selon un axe Y, c'est-à-dire selon une direction parallèle, ou sensiblement parallèle, à une direction d'extension du bras 130 entre deux extrémités longitudinales opposées 28 et 29.

La première extrémité 28 de l'entraîneur 10 est configurée pour autoriser la fixation de l'entraîneur 10 sur le bras 130 par l'ensemble pivot 120.

La deuxième extrémité 29 est agencée pour solidariser l'entraîneur 10 sur un arbre d'entraînement 80 visible sur la figure 1, d'axe de rotation X. L'entraîneur 10 permet de transmettre le mouvement de rotation de l'arbre 80 vers le bras 130.

L'entraîneur 10 est rendu solidaire de l'arbre d'entraînement 80 par un écrou (non représenté sur la figure 1) qui est vissé sur l'arbre 80. Comme illustré sur la figure 1, l'écrou est coiffé par un capuchon 20 qui vient sur le dessus de l'entraîneur 10.

L'entraîneur 10 comporte, au niveau de la seconde extrémité 29, un contour extérieur 13 en arc de cercle lorsque l'entraîneur 10 est observé suivant l'axe X. L'entraineur 10 comporte autour d'un orifice 11 et sur sa face inférieure 14, un logement 30 visible sur la figure 2a agencé pour recevoir une portion courbée 12 du tuyau 2 de liquide lave-glace.

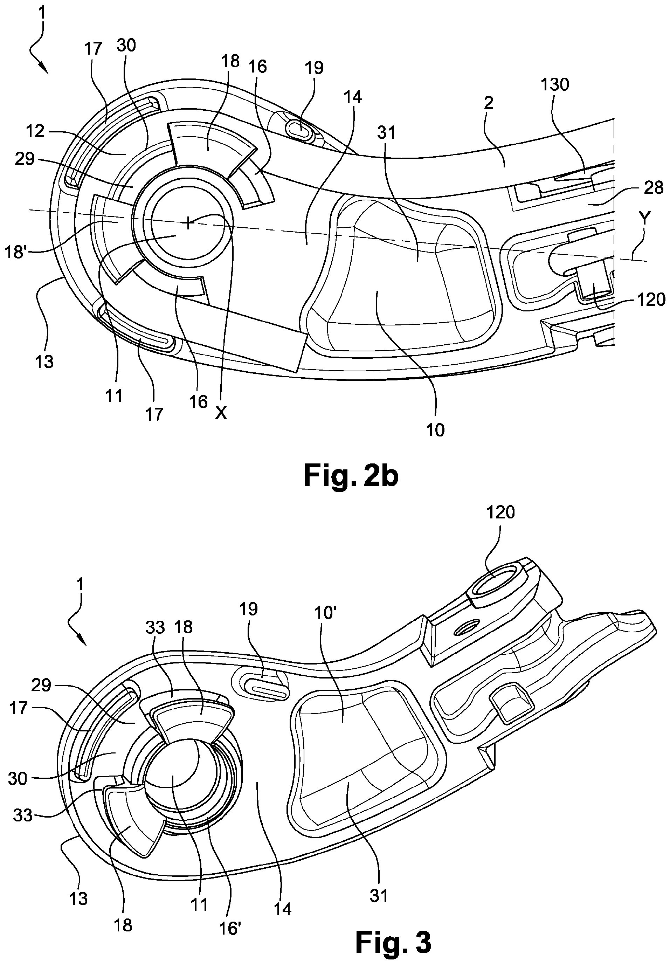

Comme illustré sur les figures 1, 2a et 2b, la portion courbée 12 du tuyau 2 est en retrait du contour extérieur 13 de l'entraîneur 10 lorsque le dispositif 1 est observé suivant l'axe de rotation X.

Ainsi, lorsque l'entraineur 10 est rabattu contre le pare-brise 140 comme illustré sur la figure 1, la portion courbée 12 est invisible lorsque le dispositif 1 est observé suivant l'axe de rotation X.

Ceci permet de renforcer l'esthétique du dispositif 1.

Le logement 30 de l'entraineur 10 est décrit plus en détail en référence aux figures 2a et 2b.

L'entraîneur 10 comprend au niveau de la seconde extrémité 29, l'orifice 11 de forme circulaire lorsqu'il est observé suivant l'axe X, agencé pour recevoir l'arbre d'entraînement 80.

Le logement 30 est formé sur la face inférieure 14 sensiblement plane. Le logement 30 de l'entraîneur 10 est formé entre une nervure radialement intérieure 16 et deux nervure radialement extérieures 17. Ces nervures 16 et 17 permettent de maintenir efficacement la portion courbée 12 du tuyau durant les mouvements oscillatoires du bras 130 d'essuie-glace. La nervure intérieure 16 et les nervures extérieures 17 sont en forme d'arc de cercle, centrées sur l'orifice 11, lorsque l'entraîneur 10 est observé suivant l'axe de rotation X.

Les nervures extérieures 17 s'étendent parallèlement au du contour extérieur 13 de l'entraineur 10.

La nervure intérieure 16 s'étend sur une ouverture angulaire d'au moins 300°, comme représenté sur la figure 2b.

Les nervures extérieures 17, plus courtes, s'étendent chacune sur moins de 90°

L'entraîneur 10 comporte également deux pattes d'encliquetage 18 agencées pour maintenir la portion courbée 12 du tuyau 2 dans le logement 30. Ces pattes d'encliquetage 18 se raccordent au sommet de la nervure intérieure 16.

Les deux pattes d'encliquetage 18 sont formées chacune par un retour qui s'étend parallèlement à la face inférieure 14 de l'entraîneur 10, et ce retour vient en appui sur la portion courbée 12 du tuyau 2.

L'entraîneur 10 comporte en outre un élément de guidage 19 du tuyau 2 de liquide lave-glace, agencé pour guider la portion courbée 12 du tuyau 2 vers le logement 30. Cet élément de guidage 19 a pour rôle principal d'assurer une bonne courbure au tuyau durant les oscillations du bras 130 d'essuie-glace et de permettre au tuyau 2 de mieux être maintenu par l'entraineur 10. Cet élément de guidage 19 présente une forme de pion.

Grâce à ce logement 30, le montage du tuyau 2 sur l'entraineur 10 est amovible permettant, le cas échéant, de changer le tuyau 2 relativement facilement.

L'épaisseur de l'entraineur 10 est réduite dans une zone 31 de manière à limiter le poids global de l'entraineur.

Afin de monter le tuyau 2 dans l'entraîneur 10, le tuyau 2 est introduit sensiblement radialement dans le logement 30 de l'entraîneur 10. Le tuyau 2 est alors déformé de manière à présenter la portion courbée 12 insérée dans le logement 30.

Dans l'exemple qui vient d'être décrit, l'entraineur 10 comporte une nervure intérieure 16 et deux nervures extérieures 17. Bien entendu, on ne sort pas du cadre de l'invention lorsque le nombre et/ou la forme de ces nervures varient.

Par exemple, la figure 3 représente un entraineur 10' comportant une nervure intérieure 16' qui est cylindrique fermée autour de l'orifice 11.

L'entraîneur 10' comporte une seule nervure extérieure 17 s'étendant sur un angle d'approximativement 60°. L'entraîneur 10' est pourvu d'orifices 33, au droit des pattes d'encliquetage 18, ces orifices 33 étant issus du moulage de l'entraineur 10.

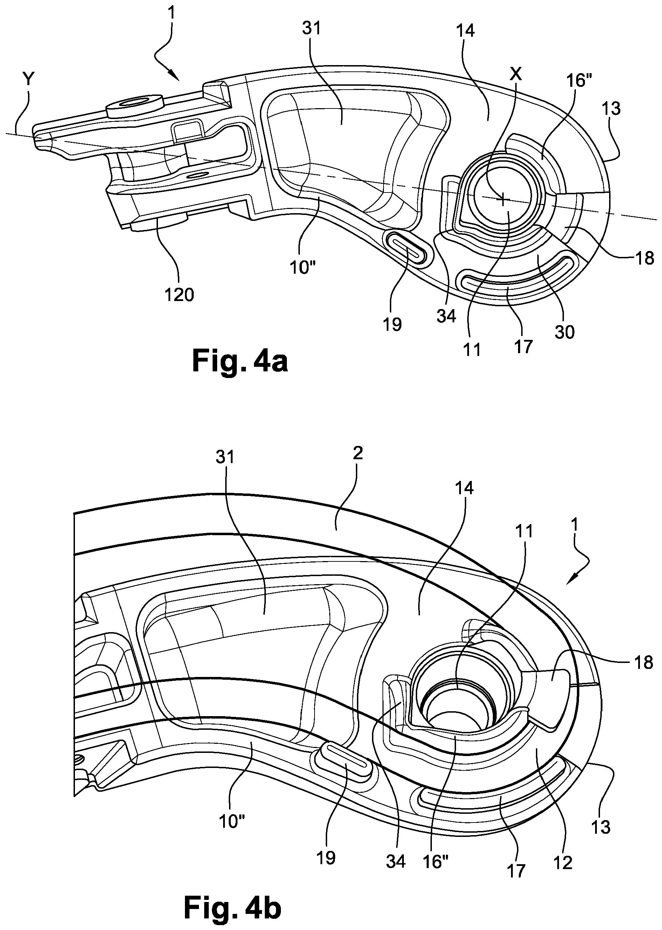

Les figures 4a et 4b représentent un entraineur 10" selon un autre exemple de réalisation de l'invention.

L'entraineur 10" comporte une nervure intérieure 16" s'étendant sur approximativement 270° autour de l'orifice 11. Cette nervure intérieure 16" comporte à l'une de ses extrémités, en vis-à-vis avec le moyen de guidage 19, un muret 34 destiné à venir en contact avec le tuyau 2. Ce muret 34, associée au moyen de guidage 19, permet de tenir le tuyau avec un effet de pincement.

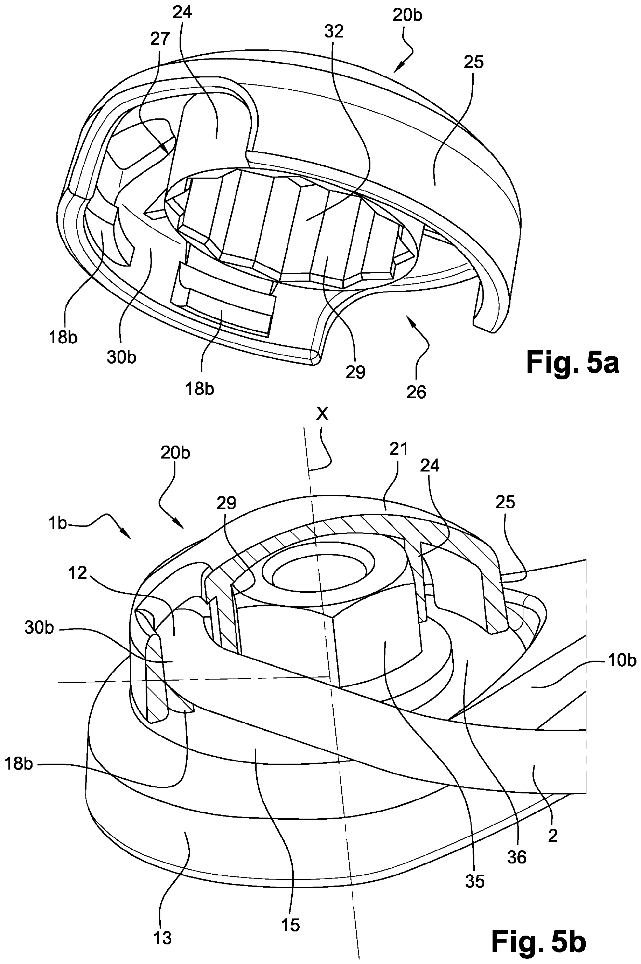

Dans les exemples qui viennent d'êtres décrits, le logement de la portion courbée du tuyau est formé sur l'entraineur. On a représenté sur les figures 5a et 5b un dispositif 1b comportant un entraineur 10b et un capuchon 20b, lequel capuchon 20b comprend un logement 30b pour recevoir la portion courbée 12 du tuyau 2.

Le capuchon 20b comporte une jupe radialement intérieure 24 et une jupe radialement extérieure 25. Ces deux jupes, intérieure 24 et extérieure 25 sont de forme sensiblement cylindrique de révolution d'axe X.

Ces jupes 24 et 25 se raccordent à une paroi supérieure 21 sensiblement bombée vers le haut.

Le logement 30b est formé entre ces deux jupes 24 et 25. La jupe intérieure 24 définit une cavité 32 et comporte des stries 29 aptes à venir en prise sur l'écrou 35, comme visible sur la figure 5b.

La jupe extérieure 25 comporte sur sa face intérieure deux pattes d'encliquetage 18b agencée pour maintenir la portion courbée 12 du tuyau 2 dans le logement 30b du capuchon 20b, cette patte d'encliquetage 18b étant raccordée avantageusement à la jupe extérieure du capuchon. Les pattes d'encliquetages 18b comportent chacune un retour qui s'étend parallèlement à la face inférieure 14 de l'entraîneur 10, et qui vient en appui sur la portion courbée 12 du tuyau 2.

Le logement 30b du capuchon 20b est agencé de sorte que la portion courbée 12 du tuyau 2 s'étende sur une ouverture angulaire d'environ 180°.

Le capuchon 20b est monolithique et est obtenu par moulage par injection en matière plastique.

Le capuchon 20b comporte également une fente d'entrée 26 débouchant dans le logement 30b et une fente de sortie 27 du logement 30b et la portion courbée du tuyau 2 s'étend depuis la fente d'entrée 26 jusqu'à la fente de sortie 27. Les fentes d'entrée 26 et de sortie 27 sont formées sur la jupe extérieure du capuchon 25.

La cavité 32 du capuchon 20b permet de venir coiffer un écrou 35. Comme on peut le voir sur la figure 5b, le capuchon 20b est disposé sur la face supérieure 15 sensiblement plane de l'entraîneur 10b. Les stries 29 du capuchon 20b viennent en prise avec le pourtour extérieur de l'écrou 35.

L'entraineur 10b comporte un renfoncement 36 sur lequel vient reposer la jupe extérieure 25 du capuchon 20b.

L'entraineur 10b est dépourvu d'éléments venant en contact avec la portion 12 du tuyau 2, cette portion courbée étant maintenue seulement grâce au capuchon 20b.

Afin de monter le tuyau 2 dans le capuchon 20b, le tuyau 2 est introduit sensiblement axialement dans le logement 30b du capuchon 20b.

Le capuchon 20b est fixé de manière amovible sur l'écrou 35.

## Revendications

1. Entraîneur de porte-balai d'essuie-glace (10, 10', 10") pour maintenir un tuyau (2) de liquide lave-glace, l'entraineur comportant :
- un orifice (11) agencé pour recevoir un arbre de rotation (80), cet arbre étant rotatif autour d'un axe de rotation (X),
- un contour extérieur (13) lorsque cet entraîneur (10, 10', 10") est observé suivant l'axe de rotation (X), **caractérisé en ce qu'**il comporte :
- un logement (30) formé sur ledit entraîneur (10, 10', 10") entre au moins une nervure radialement intérieure (16, 16', 16") et une nervure radialement extérieure (17), l'une au moins de la nervure intérieure (16, 16', 16") et extérieure (17) est en forme d'arc de cercle centré sur l'orifice de l'entraineur (10, 10', 10"), agencé pour recevoir une portion courbée (12) d'un tuyau de liquide lave-glace autour de l'orifice (11),
- une face inférieure (14), notamment sensiblement plane, et le logement (30) est formé sur cette face inférieure et est agencé de manière à ce que lorsque l'entraîneur est observé suivant l'axe de rotation (X) et lorsque le tuyau (2) est installé sur l'entraineur (10, 10', 10"), la portion courbée (12) du tuyau (2) est en retrait du contour extérieur (13) de l'entraîneur (10, 10', 10").

2. Entraîneur (10, 10', 10") selon la revendication précédente, **caractérisé en ce que** le contour extérieur (13) de l'entraîneur (10, 10', 10") est sensiblement un arc de cercle autour de l'orifice (11).

3. Entraîneur (10, 10', 10") selon l'une des revendications précédentes, **caractérisé en ce que** l'entraîneur (10, 10', 10") comporte au moins une patte d'encliquetage (18) agencée pour maintenir la portion courbée (12) du tuyau (2) dans le logement (30).

4. Entraîneur (10, 10', 10") selon l'une des revendications précédentes, **caractérisé en ce que** l'entraîneur (10, 10', 10") comporte au moins un élément de guidage (19) du tuyau (2) de liquide lave-glace, notamment agencé pour guider la portion courbée (12) du tuyau (2) vers le logement (30).

5. Dispositif de maintien (1) pour maintenir un tuyau (2) de liquide lave-glace, le dispositif comportant :
- le tuyau (2),
- un entraîneur (10, 10', 10") selon l'une des revendications 1 à 4,
**caractérisé en ce que** l'entraîneur (10, 10', 10") comporte un logement (30) agencé pour recevoir au moins partiellement le tuyau (2) dans la configuration suivante :
- le tuyau (2) comporte une portion courbée (12) autour de l'orifice (11),
- lorsque le dispositif est observé suivant l'axe de rotation (X), la portion courbée (12) du tuyau (2) est en retrait du contour extérieur (13) de l'entraîneur (10, 10', 10"),
- le logement (30) est agencé de la sorte que la portion courbée du tuyau s'étend sur une ouverture angulaire d'au moins 180°.

6. Dispositif de maintien (1) selon la revendication précédente, **caractérisé en ce que** le dispositif de maintien (1) est agencé pour permettre un montage amovible du tuyau (2) dans le logement (30).

7. Système d'essuyage (100) pour véhicule automobile, **caractérisé en ce qu'**il comporte :
- un dispositif de maintien (1) selon l'une des revendications 5 ou 6,
- un moteur d'entraînement et/ou une tringlerie agencée pour entrainer un arbre de rotation (80), l'arbre de rotation (80) étant apte à coopérer avec l'entraîneur (10, 10', 10") du dispositif de maintien (1).

8. Procédé pour monter un tuyau (2) de liquide lave-glace dans un dispositif de maintien (1) selon l'une des revendications 5 à 6, **caractérisé en ce qu'**il comporte l'étape suivante :
- monter le tuyau sur le dispositif de maintien (1).

## Patentansprüche

1. Antriebskopf für einen Scheibenwischer (10, 10', 10") zum Halten eines Scheibenwaschflüssigkeitsschlauchs (2), wobei der Antriebskopf umfasst:
- eine Öffnung (11), die dazu gestaltet ist, eine Drehwelle (80) aufzunehmen, wobei diese Welle um eine Drehachse (X) drehbar ist,
- eine äußere Kontur (13), wenn dieser Antriebskopf (10, 10', 10") entlang der Drehachse (X) betrachtet wird,
**dadurch gekennzeichnet, dass** er umfasst:
- eine Aufnahme (30), die an dem Antriebskopf (10, 10', 10") zwischen mindestens einer radial inneren Rippe (16, 16', 16") und einer radial äußeren Rippe (17) ausgebildet ist, wobei die mindestens eine innere Rippe (16, 16', 16") und äußere Rippe (17) kreisbogenförmig auf die Öffnung des Antriebskopfes (10, 10', 10") zentriert ist, wobei die Aufnahme dazu gestaltet ist, einen gekrümmten Abschnitt (12) eines Scheibenwaschflüssigkeitsschlauchs um die Öffnung (11) herum aufzunehmen,
- eine Unterseite (14), die insbesondere im Wesentlichen eben ist, wobei die Aufnahme (30) an dieser Unterseite ausgebildet ist und dazu gestaltet ist, dass, wenn der Antriebskopf entlang der Drehachse (X) betrachtet wird und der Schlauch (2) am Antriebskopf (10, 10', 10") angebracht ist, der gekrümmte Abschnitt (12) des Schlauchs (2) in Bezug auf die äußere Kontur (13) des Antriebskopfes (10, 10', 10") zurückversetzt ist.

2. Antriebskopf (10, 10', 10") nach dem vorhergehenden Anspruch, **dadurch gekennzeichnet, dass** die äußere Kontur (13) des Antriebskopfes (10, 10', 10") im Wesentlichen ein Kreisbogen um die Öffnung (11) herum ist.

3. Antriebskopf (10, 10', 10") nach einem der vorhergehenden Ansprüche, **dadurch gekennzeichnet, dass** der Antriebskopf (10, 10', 10") mindestens einen Rastlappen (18) umfasst, der dazu gestaltet ist, den gekrümmten Abschnitt (12) des Schlauchs (2) in der Aufnahme (30) zu halten.

4. Antriebskopf (10, 10', 10") nach einem der vorhergehenden Ansprüche, **dadurch gekennzeichnet, dass** der Antriebskopf (10, 10', 10") mindestens ein Führungselement (19) des Scheibenwaschflüssigkeitsschlauchs (2) umfasst, das insbesondere dazu gestaltet ist, den gekrümmten Abschnitt (29) des Schlauchs (2) zur Aufnahme (30) zu führen.

5. Haltevorrichtung (1) zum Halten eines Scheibenwaschflüssigkeitsschlauchs (2), wobei die Vorrichtung umfasst:
- den Schlauch (2),
- einen Antriebskopf (10, 10', 10") nach einem der Ansprüche 1 bis 4,
**dadurch gekennzeichnet, dass** der Antriebskopf (10, 10', 10") eine Aufnahme (30) umfasst, die dazu gestaltet ist, den Schlauch (2) in der folgenden Konfiguration mindestens teilweise aufzunehmen:
- der Schlauch (2) umfasst einen gekrümmten Abschnitt (12) um die Öffnung (11) herum,
- wenn die Vorrichtung entlang der Drehachse (X) betrachtet wird, ist der gekrümmte Abschnitt (12) des Schlauchs (2) in Bezug auf die äußere Kontur (13) des Antriebskopfes (10, 10', 10") zurückversetzt,
- die Aufnahme (30) ist so gestaltet, dass der gekrümmte Abschnitt des Schlauchs sich über eine Winkelöffnung von mindestens 180° erstreckt.

6. Haltevorrichtung (1) nach dem vorhergehenden Anspruch, **dadurch gekennzeichnet, dass** die Haltevorrichtung (1) dazu gestaltet ist, eine lösbare Montage des Schlauchs (2) in der Aufnahme (30) zu ermöglichen.

7. Wischersystem (100) für ein Kraftfahrzeug, **dadurch gekennzeichnet, dass** es umfasst:
- eine Haltevorrichtung (1) nach einem der Ansprüche 5 oder 6,
- einen Antriebsmotor und/oder ein Gestänge, der bzw. das dazu gestaltet ist, eine Drehwelle (80) anzutreiben, wobei die Drehwelle (80) geeignet ist, mit dem Antriebskopf (10, 10', 10") der Haltevorrichtung (1) zusammenzuwirken.

8. Verfahren zum Montieren eines Scheibenwaschflüssigkeitsschlauchs (2) in einer Haltevorrichtung (1) nach einem der Ansprüche 5 bis 6, **dadurch gekennzeichnet, dass** es den folgenden Schritt umfasst:
- Montieren des Schlauchs an der Haltevorrichtung (1).

## Claims

1. Driver for a wiper blade support arm (10, 10', 10") for retaining a windscreen washer liquid pipe (2), the driver comprising:
- an orifice (11) arranged to receive a rotation shaft (80), this shaft being rotated about a rotation axis (X),
- an outer contour (13) when this driver (10, 10', 10") is observed along the rotation axis (X), **characterized in that** it comprises :
- a housing (30) formed on the said driver (10, 10', 10") between at least one radially inner rib (16, 16', 16"), and one radially outer rib (17), at least one of the inner rib (16, 16', 16") and the outer rib (17) is of circularly arcuate shape, centred on the orifice of the driver (10, 10', 10"), arranged to receive a curved portion (12) of a windscreen washer liquid pipe around the orifice (11),
- a lower face (14), notably substantially flat, and the housing (30) is formed on this lower face and is arranged so that, when the driver is observed along the rotation axis (X) and when the pipe (2) is installed on the driver (10, 10', 10"), the curved portion (12) of the pipe (2) is set back from the outer contour (13) of the driver (10, 10', 10").

2. Driver (10, 10', 10") according the preceding claim, **characterized in that** the outer contour (13) of the driver (10, 10', 10") is substantially circularly arcuate around the orifice (11).

3. Driver (10, 10', 10") according to one of the preceding Claims, **characterized in that** the driver (10, 10', 10") comprises at least one click-and-ratchet fastener (18) arranged to retain the curved portion (12) of the pipe (2) in the housing (30).

4. Driver (10, 10', 10") according to one of the preceding Claims, **characterized in that** driver (10, 10', 10") comprises at least one element (19) for guiding the windscreen washer liquid pipe (2), notably arranged to guide the curved portion (12) of the pipe (2) towards the housing (30).

5. Retaining device (1) for retaining a windscreen washer liquid pipe (2), the device comprising:
- the pipe (2),
- a driver (10, 10', 10") according to one of the Claims 1 to 4,
**characterized in that** the driver (10, 10', 10") comprises a housing (30) arranged to receive at least partly the pipe (2) in the following configuration:
- the pipe (2) comprises a curved portion (12) around the orifice (11),
- when the device is observed along the rotation axis (X), the curved portion (12) of the pipe (2) is set back from the outer contour (13) of the driver (10, 10', 10"),
- the housing (30) is arranged such that the curved portion of the pipe extends over an angular aperture of at least 180°.

6. Retaining device (1) according to the preceding Claim, **characterized in that** the retaining device (1) is arranged to allow a removable mounting of the pipe (2) in the housing (30).

7. Wiping system (100) for a motor vehicle, **characterized in that** it comprises:
- a retaining device (1) according to one of the Claims 5 or 6,
- a driving motor and/or a linkage arranged to drive a rotation shaft (80), the rotation shaft (80) being capable of interacting with the driver (10, 10', 10") of the retaining device (1).

8. Method for mounting a windscreen washer liquid pipe (2) in a retaining device (1) according to one of Claims 5 to 6, **characterized in that** it comprises the following step:
- mounting the pipe on the retaining device (1).
